# FASCICULE DE BREVET EUROPEEN

(11) **EP 3 456 603 B1**
(45) Date de publication et mention de la délivrance du brevet: **12.02.2020**
(21) Numéro de dépôt: 18195216.9
(22) Date de dépôt: 18.09.2018
(51) Int. Cl.: B61D 37/00, B60N 3/00

(54) **DISPOSITIF DE FIXATION D'UN PLATEAU DE TABLE**
BEFESTIGUNGSVORRICHTUNG EINER TISCHPLATTE
FIXING DEVICE FOR A TABLE TOP

(30) Priorité: 18.09.2017 FR 1758626
(43) Date de publication de la demande: 20.03.2019
(73) Titulaire: ALSTOM Transport Technologies, 93400 Saint-Ouen (FR)
(72) Inventeur: LE CORRE, Dominique, 67350 Pfaffenhoffen (FR)
(74) Mandataire: Lavoix

(56) Documents cités:
- WO-A1-2011/009679
- WO-A1-2014/180651

## Description

La présente invention concerne un dispositif de fixation d'un plateau de table, du type comprenant :
- une structure de fixation à la paroi latérale,
- une structure support du plateau de table, définissant une surface de support s'étendant dans un plan sensiblement horizontal,
la structure support comportant :
- au moins une traverse s'étendant selon une direction transversale,
- au moins deux longerons s'étendant chacun entre une extrémité de jonction à ladite traverse et une extrémité de fixation à ladite structure de fixation dans une direction longitudinale sensiblement orthogonale à la direction transversale,
ladite traverse étant raccordée à chacun desdits longerons.

On connaît des dispositifs du type précité. Un tel dispositif est notamment utilisé pour fixer un plateau de table à une paroi latérale d'un véhicule ferroviaire. Un plateau de table ainsi fixé fournit une surface horizontale relativement stable, et peut être ensuite utilisée par les passagers en tant que support, notamment de livres, d'ordinateurs ou de nourriture.

Un tel dispositif ne donne pas entière satisfaction. En effet, lorsqu'un évènement imprévu survient qui nécessite une décélération abrupte du véhicule, des passagers parfois n'y sont pas préparés, et peuvent entrer en collision avec les plateaux de table. Au pire, de fortes collisions entre passagers et plateaux de table peuvent intervenir et entraîner des blessures graves de passagers.

Un but de l'invention est de fournir un dispositif de fixation de table et une table ne présentant pas ces inconvénients, en particulier qui limitent le risque de blessure des passagers en cas de collision.

A cet effet, l'invention a pour objet un dispositif du type précité, dans lequel la structure support comprend des zones d'amorçage de pliage configurées pour se déformer plastiquement lorsqu'un effort supérieur ou égal à un effort seuil prédéterminé est appliqué sur ladite structure support selon la direction transversale, les zones d'amorçage de pliage autorisant un pivotement de chacun desdits longerons par rapport à ladite traverse autour d'un axe de pivotement orthogonal auxdites directions transversale et longitudinale lorsqu'un effort supérieur ou égal audit effort seuil prédéterminé est appliqué sur ladite structure support selon la direction transversale.

Dans des modes de réalisation particuliers de l'invention, le dispositif présente en outre l'une ou plusieurs des caractéristiques suivantes, prise(s) isolément ou suivant toute(s) combinaison(s) techniquement possible(s) :
- les zones d'amorçage de pliage comprennent deux premières zones d'amorçage de pliage, chacune ménagée au voisinage d'une extrémité de jonction entre un longeron respectif et ladite traverse, et deux secondes zones d'amorçage de pliage, lesdites premières et deuxièmes zones d'amorçage de pliage définissant un profil sensiblement rectangulaire en l'absence d'effort exercé sur ladite structure support, chaque seconde zone d'amorçage de pliage étant ménagée sur un longeron respectif.
- chaque longeron comprend une portion mobile, s'étendant depuis la seconde zone d'amorçage de pliage ménagée sur ledit longeron jusqu'à l'extrémité de jonction dudit longeron, et une portion fixe, s'étendant depuis la seconde zone d'amorçage de pliage jusqu'à l'extrémité de fixation dudit longeron, lesdites secondes zones d'amorçage de pliage autorisant un pivotement de la portion mobile de chacun desdits longerons par rapport à la portion fixe autour d'un axe de pivotement orthogonal auxdites directions transversales et longitudinales lorsqu'un effort supérieur ou égal audit effort seuil prédéterminé est appliqué sur ladite structure support selon la direction longitudinale.
- les zones d'amorçage de pliage comprennent deux premières zones d'amorçage de pliage, chacune ménagée au voisinage d'une extrémité de jonction entre un longeron respectif et ladite traverse, et deux secondes zones d'amorçage de pliage, lesdites premières et deuxièmes zones d'amorçage de pliage définissant un profil sensiblement rectangulaire en l'absence d'effort exercé sur ladite structure support,
   la structure de fixation comprend deux montants s'étendant chacun depuis l'extrémité de fixation d'un desdits longeron, sensiblement orthogonalement audit longeron, lesdits montants étant destinés à être fixés à la paroi latérale du véhicule, chaque seconde zone d'amorçage de pliage étant ménagée sur un montant respectif.
- chaque montant comprend une paroi transversale de fixation à la paroi latérale du véhicule, et une paroi longitudinale s'étendant selon la direction longitudinale de la paroi transversale jusqu'à l'extrémité de fixation d'un desdits longerons, et chaque seconde zone d'amorçage de pliage est ménagée au voisinage d'une zone de raccordement entre la paroi longitudinale et la paroi transversale du montant respectif.
- au moins une des zones d'amorçage de pliage est formée par une zone amincie de la traverse et/ou de longeron, la zone amincie ayant une épaisseur inférieure à une épaisseur moyenne de la traverse et des longerons ou formée par une zone de la traverse et/ou de longeron comportant des évidements, notamment des évidements circulaires.
- le dispositif de fixation comprend en outre une cornière latérale destinée à être fixée à la paroi latérale en regard d'une extrémité d'un bord du plateau de table.
- le dispositif est constitué d'une seule pièce.

L'invention a également pour objet une table pour un véhicule, ladite table comprenant un dispositif de fixation selon l'invention et un plateau de table, le plateau de table reposant sur la surface de support, un jeu initial se présentant entre la cornière et la table en l'absence d'effort exercé sur ladite structure support, ledit jeu étant propre à diminuer sensiblement à zéro après la déformation plastique d'au moins une zone d'amorçage de pliage, la largeur du jeu initial étant avantageusement comprise entre 10 et 20 millimètres.

La table peut également comprendre un élément de fixation de la traverse à la surface inférieure du plateau de table, l'élément de fixation se situant sensiblement au centre de la largeur du plateau de table, l'élément de fixation étant du type équerre.

D'autres caractéristiques et avantages de l'invention apparaîtront à la lecture de la description qui va suivre, donnée uniquement à titre d'exemple et faite en se référant aux dessins annexés, dans lesquels :

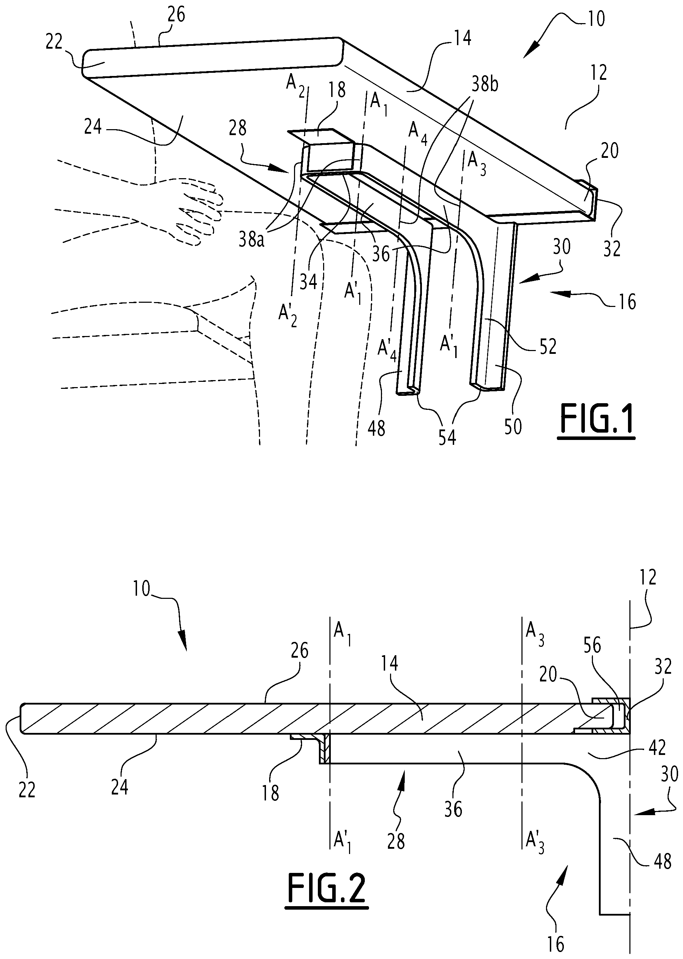

- la figure 1 est une vue en perspective d'une table comprenant un dispositif de fixation selon l'invention en fonctionnement, un plateau de table étant monté sur le dispositif,
- la figure 2 est une vue de côté de la table de la figure 1,
- la figure 3 est une vue de dessous de la table de la figure 1, en l'absence d'effort exercé sur le côté du dispositif,
- la figure 4 est une vue similaire à la figure 3, le dispositif de fixation étant déformé plastiquement après l'application d'un effort supérieur ou égal à un effort seuil prédéterminé sur le côté du dispositif.

La table 10 est typiquement montée sur une paroi latérale 12 d'un véhicule ferroviaire. La table 10 comporte un plateau 14 sensiblement horizontal, un dispositif de fixation 16, et un élément de fixation 18.

Le plateau 14 de table s'étend longitudinalement entre un premier bord d'extrémité 20 en regard de la paroi latérale 12, et un deuxième bord d'extrémité 22 opposé au premier bord d'extrémité 20.

Le deuxième bord d'extrémité 22 est par exemple en regard d'un couloir d'un véhicule ferroviaire.

Dans ce qui suit, on désignera par « longitudinal(e) » une direction ou un plan destiné à s'étendre, en utilisation, orthogonalement à la paroi latérale du véhicule ferroviaire, et par « transversal(e) » une direction ou un plan destiné à s'étendre, en utilisation, parallèlement à la paroi latérale du véhicule ferroviaire et dans un plan horizontal.

Le plateau 14 présente également une surface inférieure 24 destinée à être en contact avec la face supérieure du dispositif de fixation 16 et avec la surface supérieure de l'élément de fixation 18, et une surface supérieure 26 opposée à la surface inférieure 24, propre à supporter des objets.

Le dispositif de fixation 16 comporte une structure support 28 du plateau 14, une structure de fixation 30 à la paroi latérale 12, et une cornière latérale 32 en regard de la première extrémité 20 du plateau 14.

Avantageusement, le dispositif de fixation 16 est constitué d'une seule pièce. Il est constitué par exemple d'une tôle découpée et pliée.

La structure support 28 définit une surface de support, s'étendant dans un plan sensiblement horizontal, en utilisation. Avantageusement, la surface de support s'étend dans un plan parallèle à la surface inférieure 24 du plateau 14.

Le plateau 14 de table repose sur la surface de support.

La structure support 28 et la structure de fixation 30 sont réalisées avantageusement en matériau métallique, par exemple en acier ou en aluminium. Dans une configuration, la structure support 28 et la structure de fixation 30 sont réalisées en un même matériau. Dans une autre configuration, elles sont réalisées en matériaux différents.

La structure support 28 comporte au moins une traverse 34 s'étendant selon une direction transversale.

La structure support 28 comporte en outre au moins deux longerons 36 s'étendant dans une direction longitudinale.

La structure support 28 comporte en outre des zones d'amorçage de pliage 38.

La traverse 34 est raccordée à chacun des longerons 36.

En particulier, les deux longerons 36 s'étendent chacun longitudinalement entre une extrémité de jonction 40 à la traverse 34 et une extrémité de fixation 42 à la structure de fixation 30.

Ainsi, la traverse 34 est raccordée à l'extrémité de jonction 40 de chacun des longerons 36.

Les zones d'amorçage de pliage 38 sont configurées pour se déformer plastiquement lorsqu'un effort supérieur ou égal à un effort seuil prédéterminé est appliqué sur la structure support 28 selon la direction transversale. Avantageusement, les zones d'amorçage de pliage 38 autorisent un pivotement de chacun des longerons 36 par rapport à la traverse 34 autour d'un axe de pivotement A - A' respectif orthogonal aux directions transversale et longitudinale lorsqu'un effort supérieur ou égal audit effort seuil prédéterminé est appliqué sur la structure support 28 selon la direction transversale.

Avantageusement, les zones d'amorçage de pliage 38 comprennent deux premières zones d'amorçage de pliage 38a, et deux secondes zones d'amorçage de pliage 38b.

Les premières zones d'amorçage de pliage 38a sont chacune ménagée au voisinage de l'extrémité de jonction 40 entre un longeron 36 respectif et la traverse 34.

Les secondes zones d'amorçage de pliage 38b sont ménagées sur un longeron respectif 36.

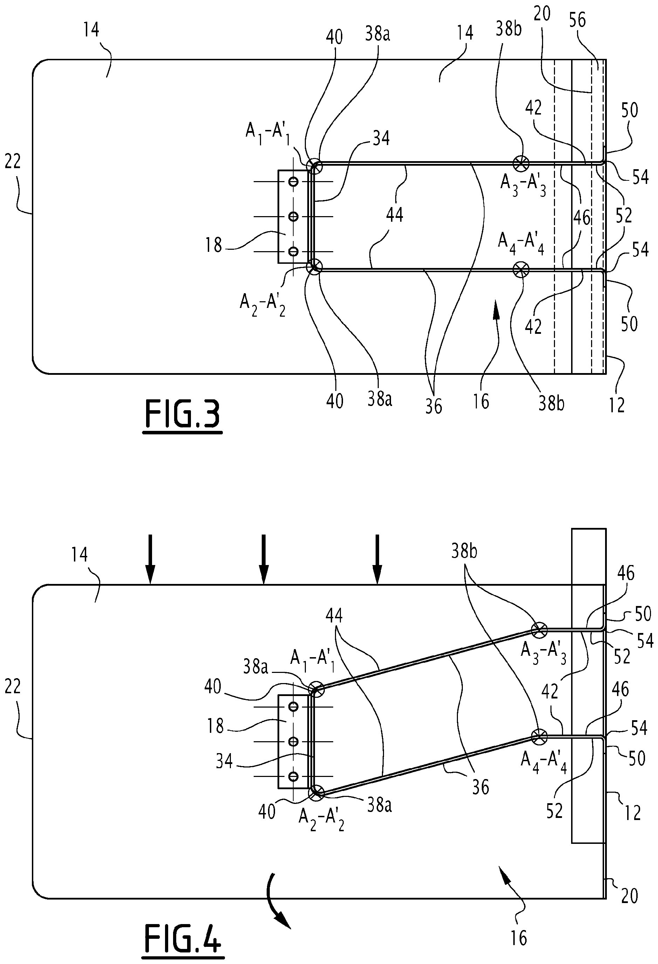

Comme illustré sur la figure 3, les premières et deuxièmes zones d'amorçage de pliage 38a,b définissent un profil sensiblement rectangulaire en l'absence d'effort exercé sur la structure support 28.

Chaque longeron 36 comprend une portion mobile 44 et une portion fixe 46.

La portion mobile 44 s'étend depuis la seconde zone d'amorçage de pliage 38b jusqu'à l'extrémité de jonction 40. La portion fixe 46 s'étend depuis la seconde zone d'amorçage de pliage 38b jusqu'à l'extrémité de fixation 42.

Les secondes zones d'amorçage de pliage 38b autorisent un pivotement de la portion mobile 44 de chacun des longerons 36 par rapport à la portion fixe 46 autour d'un axe de pivotement A - A' respectif orthogonal aux directions transversales et longitudinales lorsqu'un effort supérieur ou égal audit effort seuil prédéterminé est appliqué sur la structure support 28 selon la direction transversale.

Après la déformation plastique des zones d'amorçage de pliage 38, les premières et secondes zones de pliage 38a,b définissent un profil en forme de parallélogramme (non rectangle). Ainsi, la structure support 28 présente sensiblement une forme de parallélogramme dans un plan horizontal. La structure de fixation 30 comprend deux montants 48 s'étendant chacun sensiblement orthogonalement au longeron 36 depuis l'extrémité de fixation 42 du longeron 36.

Les montants 48 sont destinés à être fixés à la paroi latérale 12 du véhicule.

Chaque montant 48 comprend une paroi transversale 50 de fixation à la paroi latérale 12 du véhicule, et une paroi longitudinale 52 s'étendant selon la direction longitudinale de la paroi transversale 50 jusqu'à l'extrémité de fixation 42 d'un longeron 36.

Dans une variante, chaque seconde zone d'amorçage de pliage 38b est ménagée sur un montant 48 respectif. Avantageusement, chaque seconde zone d'amorçage de pliage 38b est ménagée au voisinage d'une zone de raccordement 54 entre la paroi transversale 50 et la paroi longitudinale 52 du montant 48 respectif.

Le matériau des zones d'amorçage de pliage 38 est fragilisé afin de permettre leurs déformations plastiques lorsqu'un effort supérieur ou égal à l'effort seuil prédéterminé est appliqué sur la structure support 28 selon la direction transversale, sans entraîner la déformation plastique des autres parties.

Dans une configuration, au moins une des zones d'amorçage de pliage 38 est formée par une zone amincie de la traverse 34 et/ou de longeron 36. La zone amincie a une épaisseur inférieure à une épaisseur moyenne de la traverse 34 et des longerons 36, par exemple inférieure de 25% à 75%.

Dans une autre configuration, au moins une des zones d'amorçage de pliage 38 est une zone de la traverse 34 et/ou de longeron 36 comportant des évidements. Ces évidements ont par exemple une forme circulaire.

La cornière latérale 32 est destinée à être fixée à la paroi latérale 12 en regard de la première extrémité 20 d'un bord du plateau 14 de table.

Pendant la déformation plastique d'au moins une zone d'amorçage de pliage 38, le plateau 14 de table est guidé en translation circulaire dans la cornière latérale 32.

Un jeu 56 se présente entre la cornière 32 et le plateau 14 de table.

En l'absence d'effort exercé sur la structure support 28, le jeu 56 présente une largeur initiale. Avantageusement, la largeur initiale est comprise entre 10 et 20 millimètres.

Après la déformation plastique d'au moins une zone d'amorçage de pliage 38, la largeur du jeu 56 diminue sensiblement à zéro. Lorsque le plateau 14 de table rentre en contact latéral avec le fond de la cornière 32, le plateau 14 ne peut plus avancer, ce qui permet de contrôler le déplacement maximum de la table 10 pour ne pas blesser les passagers assis sur les sièges d'en face de la direction de déplacement du plateau 14.

L'élément de fixation 18 est destiné à fixer la traverse 34 à la surface inférieure 24 du plateau de table. Avantageusement, l'élément de fixation 18 se situe sensiblement au centre de largeur du plateau 14 de table.

L'élément de fixation 18 est par exemple du type équerre.

Grâce à l'invention décrite ci-dessus, les passagers logés dans un véhicule sont mieux protégés. Notamment lors des collisions entre un passager et un plateau de table dues aux accidents, la déformation plastique d'un tel dispositif de fixation permet d'absorber une partie de l'énergie du choc, ce qui diminue l'énergie restituée au passager et qui pourrait éviter une blessure grave du passager.

## Revendications

1. Dispositif de fixation (16) d'un plateau (14) de table à une paroi latérale (12) d'un véhicule, le dispositif de fixation (16) comprenant :
- une structure de fixation (30) à la paroi latérale (12),
- une structure support (28) du plateau (14) de table, définissant une surface de support s'étendant dans un plan sensiblement horizontal,
la structure support (28) comportant :
- au moins une traverse (34) s'étendant selon une direction transversale,
- au moins deux longerons (36) s'étendant chacun entre une extrémité de jonction (40) à ladite traverse (34) et une extrémité de fixation (42) à ladite structure de fixation (30) dans une direction longitudinale sensiblement orthogonale à la direction transversale,
ladite traverse (34) étant raccordée à chacun desdits longerons (36),
le dispositif de fixation (16) étant **caractérisé en ce que** la structure support (28) comprend des zones d'amorçage de pliage (38) configurées pour se déformer plastiquement lorsqu'un effort supérieur ou égal à un effort seuil prédéterminé est appliqué sur ladite structure support (28) selon la direction transversale, les zones d'amorçage de pliage (38) autorisant un pivotement de chacun desdits longerons (36) par rapport à ladite traverse (34) autour d'un axe de pivotement (A - A') orthogonal auxdites directions transversale et longitudinale lorsqu'un effort supérieur ou égal audit effort seuil prédéterminé est appliqué sur ladite structure support (28) selon la direction transversale.

2. Dispositif de fixation (16) selon la revendication 1, **caractérisé en ce que** les zones d'amorçage de pliage (38) comprennent deux premières zones d'amorçage de pliage (38a), chacune ménagée au voisinage d'une extrémité de jonction (40) entre un longeron (36) respectif et ladite traverse (34), et deux secondes zones d'amorçage de pliage (38b), lesdites premières et deuxièmes zones d'amorçage de pliage (38a, 38b) définissant un profil sensiblement rectangulaire en l'absence d'effort exercé sur ladite structure support (28), chaque seconde zone d'amorçage de pliage (38b) étant ménagée sur un longeron (36) respectif.

3. Dispositif de fixation (16) selon la revendication 2, **caractérisé en ce que** chaque longeron (16) comprend une portion mobile (44), s'étendant depuis la seconde zone d'amorçage de pliage (38b) ménagée sur ledit longeron (36) jusqu'à l'extrémité de jonction (40) dudit longeron (36), et une portion fixe (46), s'étendant depuis la seconde zone d'amorçage de pliage (38b) jusqu'à l'extrémité de fixation (42) dudit longeron (36), lesdites secondes zones d'amorçage de pliage (38b) autorisant un pivotement de la portion mobile (44) de chacun desdits longerons (36) par rapport à la portion fixe (46) autour d'un axe de pivotement (A - A') orthogonal auxdites directions transversales et longitudinales lorsqu'un effort supérieur ou égal audit effort seuil prédéterminé est appliqué sur ladite structure support (28) selon la direction longitudinale.

4. Dispositif de fixation (16) selon la revendication 1, dans lequel :
- les zones d'amorçage de pliage (38) comprennent deux premières zones d'amorçage de pliage (38a), chacune ménagée au voisinage d'une extrémité de jonction (40) entre un longeron (36) respectif et ladite traverse (34), et deux secondes zones d'amorçage de pliage (38b), lesdites premières et deuxièmes zones d'amorçage de pliage (38a, 38b) définissant un profil sensiblement rectangulaire en l'absence d'effort exercé sur ladite structure support (28),
- la structure de fixation (30) comprend deux montants (48) s'étendant chacun depuis l'extrémité de fixation (42) d'un desdits longeron (36), sensiblement orthogonalement audit longeron (36), lesdits montants (48) étant destinés à être fixés à la paroi latérale (12) du véhicule, chaque seconde zone d'amorçage de pliage (38b) étant ménagée sur un montant (48) respectif.

5. Dispositif de fixation (16) selon la revendication 4, dans lequel chaque montant (48) comprend une paroi transversale (50) de fixation à la paroi latérale (12) du véhicule, et une paroi longitudinale (52) s'étendant selon la direction longitudinale de la paroi transversale (50) jusqu'à l'extrémité de fixation (42) d'un desdits longerons (36), et chaque seconde zone d'amorçage de pliage (38b) est ménagée au voisinage d'une zone de raccordement (54) entre la paroi longitudinale (52) et la paroi transversale (50) du montant (48) respectif.

6. Dispositif de fixation (16) selon l'une quelconque des revendications 1 à 5, dans lequel au moins une des zones d'amorçage de pliage (38) est formée par une zone amincie de la traverse (34) et/ou de longeron (36), la zone amincie ayant une épaisseur inférieure à une épaisseur moyenne de la traverse (34) et des longerons (36) ou formée par une zone de la traverse (34) et/ou de longeron (36) comportant des évidements, notamment des évidements circulaires.

7. Dispositif de fixation (16) selon l'une quelconque des revendications 1 à 6, comprenant en outre une cornière latérale (32) destinée à être fixée à la paroi latérale (12) en regard d'une extrémité (20) d'un bord du plateau (14) de table.

8. Dispositif de fixation (16) selon l'une quelconque des revendications 1 à 7, le dispositif (16) étant constitué d'une seule pièce.

9. Table (10) pour un véhicule, ladite table (10) comprenant un dispositif de fixation (16) selon l'une quelconque des revendications 1 à 8 et un plateau (14) de table, le plateau (14) de table reposant sur la surface de support, un jeu (56) initial se présentant entre la cornière (32) et la table (10) en l'absence d'effort exercé sur ladite structure support (28), ledit jeu (56) est propre à diminuer sensiblement à zéro après la déformation plastique d'au moins une zone d'amorçage de pliage (38), la largeur du jeu (56) initial étant avantageusement comprise entre 10 et 20 millimètres.

10. Table (10) selon la revendication 9, comprenant un élément de fixation (18) de la traverse (34) à la surface inférieure (24) du plateau (14) de table, l'élément de fixation (18) se situant sensiblement au centre de la largeur du plateau (14) de table, l'élément de fixation (18) étant du type équerre.

## Patentansprüche

1. Vorrichtung (16) zum Befestigen einer Tischplatte (14) an einer Seitenwand (12) eines Fahrzeugs, wobei die Befestigungsvorrichtung (16) umfasst:
- eine Konstruktion (30) zum Befestigen an der Seitenwand (12),
- eine Konstruktion (28) zum Abstützen der Tischplatte (14), die eine sich in einer im wesentlichen horizontalen Ebene erstreckende Abstützfläche definiert,
wobei die Abstützkonstruktion (28) aufweist:
- mindestens eine Traverse (34) die sich in einer Querrichtung erstreckt,
- mindestens zwei Längsträger (36), die sich jeweils zwischen einem Anschlussende (40) an die Traverse (34) und einem Befestigungsende (42) an die Befestigungskonstruktion (30) in einer Längsrichtung im Wesentlichen orthogonal zu der Querrichtung erstrecken,
wobei die Traverse (34) mit jedem Längsträger (36) verbunden ist,
wobei die Befestigungsvorrichtung (16) **dadurch gekennzeichnet ist, dass** die Abstützkonstruktion (28) Biegeauslösezonen (38) umfasst, die ausgebildet sind, sich plastisch zu verformen, wenn eine Kraft größer als eine oder gleich einer vorbestimmten Schwellenkraft auf die Abstützkonstruktion (28) gemäß der Querrichtung aufgebracht wird, wobei die Biegeauslösezonen ein Schwenken jedes Längsträgers (36) in Bezug auf die Traverse (34) um eine Schwenkachse (A-A') orthogonal zu der Querrichtung und der Längsrichtung, wenn eine Kraft größer als die oder gleich der Schwellenkraft auf die Abstützkonstruktion (28) gemäß der Querrichtung aufgebracht wird.

2. Befestigungsvorrichtung (16) nach Anspruch 1, **dadurch gekennzeichnet, dass** die Biegeauslösezonen (38) zwei erste Biegeauslösezonen (38a), die jeweils in der Nähe eines Anschlussendes (40) zwischen einem jeweiligen Längsträger (36) und der Traverse (34) angeordnet sind, und zwei zweite Biegeauslösezonen (38b) umfassen, wobei die ersten und zweiten Biegeauslösezonen (38a, 38b) ein im Wesentlichen senkrechtes Profil bei Nichtvorhandensein der auf die Abstützkonstruktion (28) ausgeübten Kraft definieren, wobei jede zweite Biegeauslösezone (38b) an einem jeweiligen Längsträger (36) angeordnet ist.

3. Befestigungsvorrichtung (16) nach Anspruch 2, **dadurch gekennzeichnet, dass** jeder Längsträger (16) ein bewegliches Teil (44), das sich von der zweiten, an dem Längsträger (36) angeordneten Biegeauslösezone (38b) bis zu dem Anschlussende (40) des Längsträgers (36) erstreckt, und ein feststehendes Teil (46) umfasst, das sich von der zweiten Biegeauslösezonen (38b) bis zu dem Befestigungsende (42) des Längsträgers (36) erstreckt, wobei die zweiten Biegeauslösezonen (38b) ein Schwenken des beweglichen Teils (44) jedes Längsträgers (36) in Bezug auf das feststehende Teil (46) um eine Schwenkachse (A-A') orthogonal zu den Querrichtungen und Längsrichtungen gestatten, wenn eine Kraft größer als die oder gleich der vorbestimmten Schwellenkraft auf die Abstützkonstruktion (28) gemäß der Längsrichtung aufgebracht wird.

4. Befestigungsvorrichtung (16) nach Anspruch 1, bei der:
- die Biegeauslösezonen (38) zwei erste Biegeauslösezonen (38a), von denen jede in der Nähe eines Anschlussendes (40) zwischen einem jeweiligen Längsträger (36) und der Traverse (34) angeordnet ist, und zwei zweite Biegeauslösezonen (38b) umfassen, wobei die ersten und zweiten Biegeauslösezonen (38a, 38b) ein im Wesentlichen rechteckiges Profil bei Nichtvorhandensein einer auf die Abstützkonstruktion (28) ausgeübten Kraft definieren,
- die Befestigungskonstruktion (30) zwei Stützen (48) umfasst, die sich jeweils zwischen dem Befestigungsende (42) eines der Längsträger (36) im Wesentlichen orthogonal zu dem Längsträger (36) erstrecken, wobei die Stützen (48) vorgesehen sind, an der Seitenwand (12) des Fahrzeugs befestigt zu werden, wobei jede zweite Biegeauslösezone (38b) an der jeweiligen Stütze (48) angeordnet ist.

5. Befestigungsvorrichtung (16) nach Anspruch 4, bei der jede Stütze (48) eine Querwand (50) zur Befestigung an der Seitenwand (12) des Fahrzeugs und eine Längswand (52) umfasst, die sich gemäß der Längsrichtung der Querwand (50) bis zu dem Befestigungsende (42) eines der Längsträger (36) erstreckt, und jede zweite Biegeauslösezonen (38b) in der Nähe einer Anschlusszone (54) zwischen der Längswand (52) und der Querwand (50) der jeweiligen Stütze (48) angeordnet ist.

6. Befestigungsvorrichtung (16) nach einem beliebigen der Ansprüche 1 bis 5, bei der mindestens eine der Biegeauslösezonen (38) durch eine verdünnte Zone der Traverse (34) und/oder des Längsträgers (36) gebildet ist, wobei die verdünnte Zone eine Dicke aufweist, die kleiner als eine mittlere Dicke der Traverse (34) und der Längsträger (36) ist, oder von einer Zone der Traverse (34) und/oder des Längsträgers (36) gebildet ist, die Ausnehmungen, insbesondere kreisförmige Ausnehmungen aufweist.

7. Befestigungsvorrichtung (16) nach einem beliebigen der Ansprüche 1 bis 6, außerdem eine Profilleiste (32) umfassend, die vorgesehen ist, an der Seitenwand (12) gegenüber einem Ende (20) eines Randes der Tischplatte (14) befestigt zu werden.

8. Befestigungsvorrichtung (16) nach einem beliebigen der Ansprüche 1 bis 7, wobei die Vorrichtung (16) aus einem einzigen Stück gebildet ist.

9. Tisch (10) für ein Fahrzeug, wobei der Tisch (10) eine Befestigungsvorrichtung (16) nach einem beliebigen der Ansprüche 1 bis 8 und eine Tischplatte (14) umfasst, wobei die Tischplatte auf der Abstützfläche ruht, wobei ein Anfangsspiel (56) zwischen der Profilleiste (32) und dem Tisch (10) bei Nichtvorhandensein einer auf die Abstützkonstruktion (28) ausgeübten Kraft vorgesehen ist und das Spiel (56) geeignet ist, sich nach der plastischen Verformung mindestens einer Biegeauslösezonen (38) auf null zu verringern, wobei die Breite des Anfangsspiels (56) vorteilhafterweise zwischen 10 und 20 mm liegt.

10. Tisch (10) nach Anspruch 9, der ein Befestigungselement (18) der Traverse (34) an der Unterfläche (24) der Tischplatte (14) umfasst, wobei das Befestigungselemente (18) im Wesentlichen in der Mitte der Breite der Tischplatte (14) liegt und das Befestigungselement (18) als Winkel ausgebildet ist.

## Claims

1. A device (16) for fastening a table top (14) to a side wall (12) of a vehicle, the fastening device (16) comprising:
- a structure (30) for fastening to the side wall (12),
- a support structure (28) of the table top (14), defining a support surface extending in a substantially horizontal plane,
the support structure (28) comprising:
- at least one crosspiece (34) extending along a transverse direction,
- at least two beams (36) each extending between a junction end (40) to said crosspiece (34) and a fastening end (42) to said fastening structure (30) in a longitudinal direction substantially orthogonal to the transverse direction,
said crosspiece (34) being connected to each of said beams (36),
the fastening device (16) being **characterized in that** the support structure (28) comprises bending onset zones (38) configured to deform plastically when a force greater than or equal to a predetermined threshold force is applied on said support structure (28) along the transverse direction, the bending onset zones (38) allowing pivoting of each of said beams (36) relative to said crosspiece (34) around a pivot axis (A-A') orthogonal to said transverse and longitudinal directions when a force greater than or equal to said predetermined threshold force is applied on said support structure (28) along the transverse direction.

2. The fastening device (16) according to claim 1, **characterized in that** the bending onset zones (38) include two first bending onset zones (38a), each arranged near a junction end (40) between a respective beam (36) and said crosspiece (34), and two second bending onset zones (38b), said first and second bending onset zones (38a, 38b) defining a substantially rectangular profile when no force is exerted on said support structure (28), each second bending onset zone (38b) being arranged on a respective beam (36).

3. The fastening device (16) according to claim 2, **characterized in that** each beam (36) comprises a movable portion (44), extending from the second bending onset zone (38b) arranged on said beam (36) to the junction end (40) of said beam (36), and a stationary portion (46), extending from the second bending onset zone (38b) to the fastening end (42) of said beam (36), said second bending onset zones (38b) allowing pivoting of the movable portion (44) of each of said beams (36) relative to the stationary portion (46) around a pivot axis (A-A') orthogonal to said transverse and longitudinal directions when a force greater than or equal to said predetermined threshold force is applied on said support structure (28) along the longitudinal direction.

4. The fastening device (16) according to claim 1, wherein:
- the bending onset zones (38) comprise two first bending onset zones (38a), each being arranged near a junction end (40) between a respective beam (36) and said crosspiece (34), and two second bending onset zones (38b), said first and second bending onset zones (38a, 38b) defining a substantially rectangular profile when no force is exerted on said support structure (28),
- the fastening structure (30) comprises two uprights (48) each extending from the fastening end (42) of one of said beams (36), substantially orthogonally to said beam (36), said uprights (48) being intended to be fastened to the side wall (12) of the vehicle, each second bending onset zone (38b) being arranged on a respective upright (48).

5. The fastening device (16) according to claim 4, wherein each upright (48) comprises a transverse wall (50) for fastening to the side wall (12) of the vehicle, and a longitudinal wall (52) extending along the longitudinal direction of the transverse wall (50) up to the fastening end (42) of one of said beams (36), and each second bending onset zone (38b) is arranged near a connecting zone (54) between the longitudinal wall (52) and the transverse wall (50) of the respective upright (48).

6. The fastening device (16) according to any one of claims 1 to 5, wherein at least one of the bending onset zones (38) is formed by a thinner zone of the crosspiece (34) and/or the beam (36), the thinner zone having a thickness lower than an average thickness of the crosspiece (34) and beams (36) or formed by a zone of the crosspiece (34) and/or beam (36) comprising recesses, in particular circular recesses.

7. The fastening device (16) according to any one of claims 1 to 6, further comprising a side angle iron (32) intended to be fastened to the side wall (12) opposite one end (20) of an edge of the table top (14).

8. The fastening device (16) according to any one of claims 1 to 7, the device (16) being made in a single piece.

9. A table (10) for a vehicle, said table (10) including a fastening device (16) according to an one of claims 1 to 8 and a table top (14), the table top (14) resting on the support surface, an initial gap (56) being present between the angle iron (32) and the table (10) when no force is exerted on said support structure (28), said gap (56) being able to decrease substantially to zero after the plastic deformation of at least one bending onset zone (38), the width of the initial gap (56) advantageously being comprised between 10 and 20 millimeters.

10. The table (10) according to claim 9, including an element (18) for fastening the crosspiece (34) to the bottom surface (24) of the table top (14), the fastening element (18) being located substantially at the center of the width of the table top (14), the fastening element (18) being of the bracket type.
